# EUROPEAN PATENT SPECIFICATION

(11) **EP 2 295 682 B1**
(45) Date of publication and mention of the grant of the patent: **02.01.2013**
(21) Application number: 10175934.8
(22) Date of filing: 09.09.2010
(51) Int. Cl.: E05B 65/12, B60R 7/06

(54) **Instrument panel with a safety device**
Instrumententafel mit einer Sicherheitsvorrichtung
Panneau d'instrument avec un dispositif de sécurité

(30) Priority: 14.09.2009 SE 0950669
(43) Date of publication of application: 16.03.2011
(73) Proprietor: Scania CV AB (publ), 151 87 Södertälje (SE)
(72) Inventor: Rigner, Tomas, SE-147 34, TUMBA (SE); Johansson, Daniel, SE-153 94, HÖLÖ (SE); Åhl, Joel, SE-113 33, STOCKHOLM (SE); Forslund, Jerker, SE-151 47, SÖDERTÄLJE (SE); Söder, Kenneth, SE-151 39, SÖDERTÄLJE (SE)

(56) References cited:
- WO-A1-2008/075622
- US-A- 4 743 060
- US-A1- 2006 005 589
- US-A1- 2006 208 506

## Description

### TECHNICAL FIELD

The invention relates to an instrument panel comprising an openable component, a fixed component and a locking mechanism for releasable securing of an openable component to a fixed component, which locking mechanism comprises a latch on one of the components and a latching edge on the other component, the latch and the latching edge being flexibly forced towards one another to secure the openable component, and being capable of being forced away from one another to release the openable component.

### BACKGROUND

A locking mechanism of the type specified above can be used for securing a cover for a storage space above an instrument panel in a vehicle. The latch can then be firmly connected to the cover and the latching edge can form part of a recess connected with a pushbutton in the instrument panel. When the pushbutton is operated, the latching edge moves forwards and releases the latch so that the cover can be opened. However, such a locking mechanism has the disadvantage that the pushbutton with the recess and the latching edge risks being moved forwards and releasing the latch when the instrument panel is subjected to a deforming force in a forward direction. Such a force may occur if a passenger's knees strike the instrument panel during a collision or violent braking. To maintain high collision safety it is therefore important for it to be possible for the locking mechanism to be kept safely closed even if the instrument panel is acted upon by external forces in a forward direction.

A known safety device of the kind indicated above, referred to in US 2008/0129101 A1, has a mechanical force of inertia sensor in the form of a pendulum intended to be set in motion in the event of a collision, in order to prevent the latch from losing locking engagement.

The prior art document US 4 743 060 A describes an emergency locking apparatus for a glove box lid. The lid comprises supporting shafts provided with notches which prevent opening of the lid when an impulsive deforming force in the oblique lower front direction is applied to the upper part of the instrument panel or the lid for the glove box in a collision of a motor vehicle. One drawback with this apparatus is that the lid risks to bounce to an open position when subjected to a principally horizontal deforming force.

### SUMMARY OF THE INVENTION

An object of the invention is to provide an instrument panel comprising an openable component, a fixed component and a locking mechanism for releasable securing of an openable component to a fixed component, which locking mechanism comprises a latch on one of the components and a latching edge on the other component, which can prevent relative movement between the latch and the latching edge when the fixed component is acted upon by a deforming force which risks releasing the openable component.

This is achieved by the features indicated in the claims.

According to a version of the invention, the instrument panel has a stop element adapted to being firmly connected to the fixed component and to engaging with the locking mechanism in order to press the latch and the latching edge towards one another when the fixed component is deformed by an external force.

This is a simple and inexpensive way of providing a locking mechanism with a collision safety function without moving parts.

In an embodiment, the latch is arranged on the openable component, and the stop element adapted to engaging with a rear side of the latch. Other possibilities are conceivable. Conversely, it is conceivable that the stop element may act upon the element which supports the latching edge.

The stop element may comprise a piece of sheet metal arranged on an inside of the fixed locking mechanism. This makes it easy to add the safety function to a given locking mechanism.

The stop element can also form a separate unit together with a portion of the locking mechanism which is adapted to being connected to the fixed component. In this manner, the safety function can be pre-integrated with the locking mechanism so that other components do not need to be modified when, for example, a vehicle is to be provided with such a safety function.

Such a unit may comprise a lock housing which can be firmly connected to an inside of the fixed component and, at an opposite side, to the stop element, and an operating means which comprises a latching recess with said latching edge and is mounted pivotably in the lock housing.

Other features and advantages of the invention may be indicated by the claims and the following description of embodiment examples.

### BRIEF DESCRIPTION OF DRAWINGS

FIG. 1 is a perspective view with portions cut away of a locking mechanism which may be provided with an instrument panel according to the invention;
FIGS. 2A-C are schematic cross-sectional views of a locking mechanism with an instrument panel according to the invention during an opening process;
FIG. 3 is a view of a locking mechanism corresponding to FIG. 2A which is acted upon by an external force; and
FIG. 4 is a perspective view from an inside of a locking mechanism corresponding approximately to FIG. 1 with an instrument panel according to the invention.

### DETAILED DESCRIPTION OF EMBODIMENT EXAMPLES

In the embodiment examples shown in the drawings, a locking mechanism according to the invention is arranged between, on the one side, a fixed component in the form of an instrument panel 20 in a cab of a vehicle 80 and, on the other side, an openable component in the form of a cover 50 intended to cover a space inside the instrument panel 20. In the space there may be an undepicted retractable desktop panel which itself covers a likewise undepicted underlying storage space.

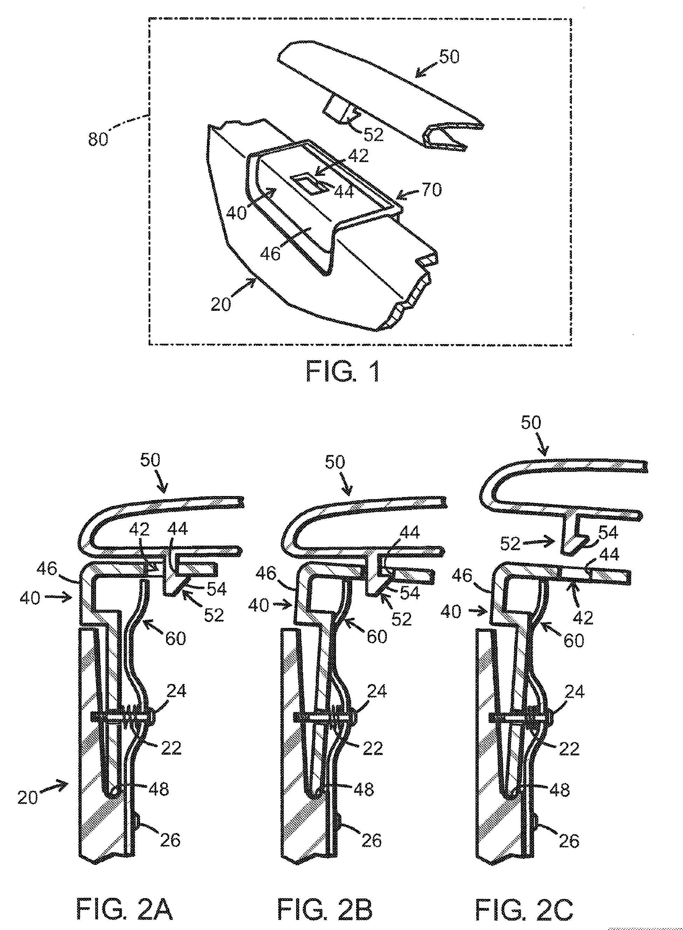

The cover 50 is mounted pivotably at its undepicted front edge and has at its rear edge a latch 52 which forms part of the locking mechanism. As may be seen in FIG. 2A, the latch 52 cooperates with a latching edge 44 of a latching recess 42 in an operating means 40 which forms part of the locking mechanism. At its lower end, the operating means 40 is mounted pivotably on the instrument panel 20 via a pivot joint 48 and is urged by a spring 22 towards the instrument panel 20 in the rearward-facing outside of the cab. The spring 22 is secured to the instrument panel 20 by a screw 24 which together with a pair of further screws 26 (of which only one is shown) secures also a stop element 60 which will be described in detail later. Closing the cover 50 causes a sloping surface 54 of the latch 52 to engage with the latching edge 44 and then push the operating means 40 forwards until the latch 52 engages lockingly under the latching edge 44 to lock the cover 50 to the instrument panel 20.

A rearward-facing outside of the operating means 40 serves as a pushbutton 46 for manual release of the locking mechanism against the force of the spring 22. When the cover 50 is to be opened, the user presses the pushbutton 46 forwards until the latch 52 is freed from the latching edge 44 according to FIG. 2B. The cover 50 can then be opened according to FIG. 2C.

According to the invention, the locking mechanism also has a stop element 60 adapted to pushing the latch 52 and the latching edge 44 towards one another when the instrument panel 20 is deformed by an external force. In the example shown in FIGS. 2A-C and 3-4, the stop element 60 takes the form of a piece of sheet metal secured to an inside of the instrument panel 20, with an upper end portion 62 which extends upwards to the vicinity of a rear edge of the latching recess 42 when the cover 50 is locked by the locking mechanism.

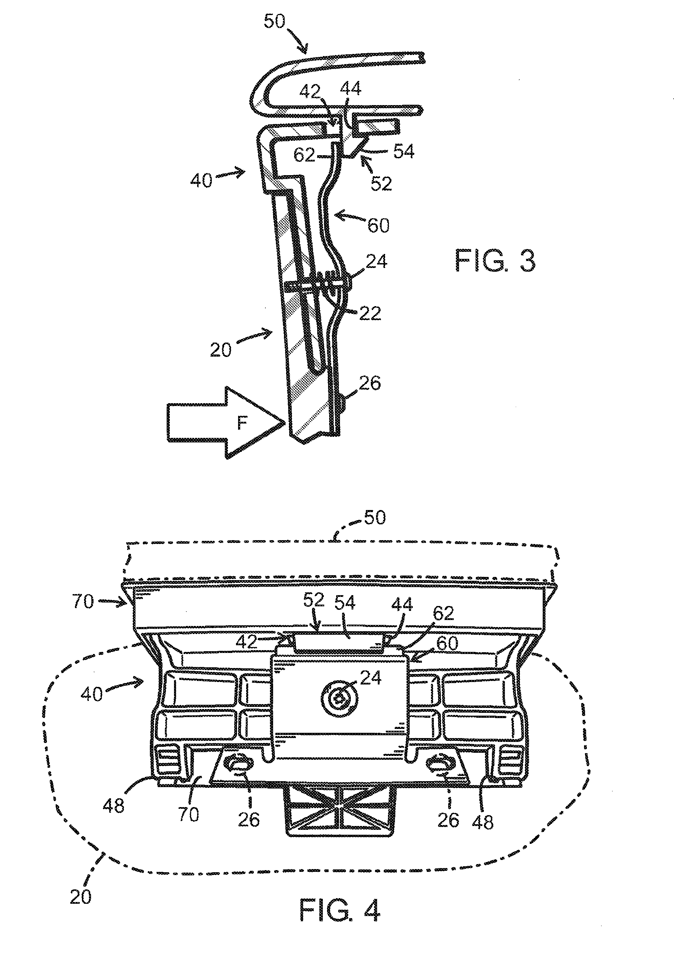

In the embodiment examples shown in FIGS. 1 and 4, the locking mechanism comprises a separate unit consisting of the operating means 40, the stop element 60 (FIG. 4) and a lock housing or casing 70 which supports these items. As implied in FIG. 4, the housing 70 and the stop means 60 is connectable to the instrument panel 20 by the screws 26, while the operating means 40 is mounted pivotably at the housing 70 via a pair of pivot joints 48.

If the instrument panel 20 is deformed by an external force F according to FIG. 3, the stop element 60 will accompany the instrument panel 20 so that the upper end portion 62 of the stop element 60 engages with the rear side of the latch 52 and keeps the latter in locking engagement with the latching edge 44 while the spring 22 continues to urge the operating means 40 in the opposite direction towards the locked position.

The description set out above is primarily intended to facilitate comprehension and no unnecessary limitations of the invention are to be inferred from it. The modifications which will be obvious to a specialist from perusal of the description may be implemented without deviating from the concept of the invention or the scope of the following claims.

## Claims

1. An instrument panel comprising an openable component (50), a fixed component (20) and a locking mechanism for releasable securing of an openable component (50) to a fixed component (20), which locking mechanism comprises a latch (52) on one of the components and a latching edge (44) on the other component, the latch and the latching edge being flexibly forced towards one another to secure the openable component, and being capable of being forced away from one another to release the openable component,
**characterised by**
a stop element (60) adapted to being firmly connected to the fixed component (20) and to engaging with the locking mechanism in order to press the latch (52) and the latching edge (44) towards one another when the fixed component (20) is deformed by an external force (F).

2. An instrument panel according to claim 1, the latch (52) being arranged on the openable component (50), and the stop element (60) being adapted to engaging with a rear side of the latch.

3. An instrument panel according to claim 1 or 2, the stop element (60) comprising a piece of sheet metal arranged on an inside of the fixed component (20).

4. An instrument panel according to any of the preceding claims, the stop element (60) forming a separate unit together with a portion of the locking mechanism which is adapted to being connected to the fixed component (20).

5. An instrument panel according to claim 4, comprising a lock housing (70) which is connectable to an inside of the fixed component (20) and, at an opposite side, to the stop element (60), and an operating means (40) which comprises a latching recess (42) with said latching edge (44) and is mounted pivotably in the lock housing.

## Patentansprüche

1. Armaturenbrett, umfassend eine öffenbare Komponente (50), eine feststehende Komponente (20) und einen Schließmechanismus, um eine öffenbare Komponente (50) an einer feststehenden Komponente (20) lösbar zu befestigen, wobei der Schließmechanismus einen Riegel (52) an einer der Komponenten und eine Verriegelungskante (44) an der anderen Komponente umfasst, wobei der Riegel und die Verriegelungskante flexibel aufeinander zu gedrängt werden, um die öffenbare Komponente zu befestigen, und in der Lage sind, voneinander weg gedrängt zu werden,
um die öffenbare Komponente freizugeben,
**gekennzeichnet durch** ein Anschlagelement (60), das dazu eingerichtet ist, fest mit der feststehenden Komponente (20) verbunden zu sein und mit dem Schließmechanismus in Eingriff zu kommen, um den Riegel (52) und die Verriegelungskante (44) aufeinanderzu zu drücken, wenn die feststehende Komponente (20) **durch** eine externe Kraft (F) deformiert wird.

2. Armaturenbrett nach Anspruch 1,
wobei der Riegel (52) an der öffenbaren Komponente (50) angeordnet ist und das Anschlagelement (60) dazu eingerichtet ist, mit einer Rückseite des Riegels in Eingriff zu kommen.

3. Armaturenbrett nach Anspruch 1 oder 2,
wobei das Anschlagelement (60) ein Stück Blech umfasst, das an einer Innenseite der feststehenden Komponente (20) angeordnet ist.

4. Armaturenbrett nach einem der vorangehenden Ansprüche,
wobei das Anschlagelement (60) eine separate Einheit zusammen mit einem Abschnitt des Schließmechanismus bildet, die dazu eingerichtet ist, mit der feststehenden Komponente (20) verbunden zu sein.

5. Armaturenbrett nach Anspruch 4,
umfassend ein Schließgehäuse (70), das mit einer Innenseite der feststehenden Komponente (20) und an einer gegenüberliegenden Seite mit dem Anschlagelement (60) verbindbar ist, und ein Bedienmittel (40), welches eine Verriegelungsausnehmung (42) mit der Verriegelungskante (44) umfasst und schwenkbar im Schließgehäuse angebracht ist.

## Revendications

1. Tableau de bord comprenant un composant ouvrable (50), un composant fixe (20) et un mécanisme de verrouillage pour fixer de manière libérable un composant ouvrable (50) à un composant fixe (20), lequel mécanisme de verrouillage comprend un verrou (52) sur l'un des composants et un bord de verrouillage (44) sur l'autre composant, le verrou et le bord de verrouillage étant poussés de manière flexible l'un vers l'autre pour fixer le composant ouvrable, et pouvant être poussés à l'opposé l'un de l'autre pour libérer le composant ouvrable,
**caractérisé par**
un élément d'arrêt (60) conçu pour être solidement relié au composant fixe (20) et pour venir en prise avec le mécanisme de verrouillage afin de presser le verrou (52) et le bord de verrouillage (44) l'un vers l'autre lorsque le composant fixe (20) est déformé par une force extérieure (F).

2. Tableau de bord selon la revendication 1, le verrou (52) étant disposé sur le composant (50) ouvrable, et l'élément d'arrêt (60) étant conçu pour venir en prise avec un côté arrière du verrou.

3. Tableau de bord selon la revendication 1 ou 2, l'élément d'arrêt (60) comprenant un morceau de tôle disposé sur un intérieur du composant fixe (20).

4. Tableau de bord selon l'une quelconque des revendications précédentes, l'élément d'arrêt (60) formant un ensemble séparé avec une partie du mécanisme de verrouillage qui est conçue pour être reliée au composant fixe (20).

5. Tableau de bord selon la revendication 4, comprenant un logement de verrou (70) qui peut être relié à un intérieur du composant fixe (20) et, sur un côté opposé, à l'élément d'arrêt (60), et un moyen d'actionnement (40) qui comprend un évidement de verrouillage (42) présentant ledit bord de verrouillage (44) et est monté à pivotement dans le logement de verrou.
